# FASCICULE DE BREVET EUROPEEN

(11) **EP 2 279 089 B1**
(45) Date de publication et mention de la délivrance du brevet: **19.06.2013**
(21) Numéro de dépôt: 09730152.7
(22) Date de dépôt: 03.04.2009
(51) Int. Cl.: B60K 7/00

(54) **MOYEU MOTORISÉ POUR UN VÉHICULE AUTOMOBILE À TRACTION ÉLECTRIQUE**
MOTORISIERTE NABE FÜR EIN KRAFTFAHRZEUG MIT EINEM ELEKTROANTRIEB
MOTORISED HUB FOR A MOTOR VEHICLE WITH AN ELECTRIC DRIVE

(30) Priorité: 11.04.2008 FR 0802010
(43) Date de publication de la demande: 02.02.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: WALSER, Daniel, CH-1700 Fribourg (CH); MARRO, Patrick, CH- Givisiez (CH)
(74) Mandataire: Lasson, Cédric Y. M.
(86) Numéro de dépôt international: PCT/EP2009/054039
(87) Numéro de publication internationale: WO 2009/124892

(56) Documents cités:
- EP-A1- 1 496 292
- EP-A2- 0 791 496
- WO-A1-2007/022865
- DE-U1- 29 519 489

## Description

La présente invention concerne la liaison au sol des véhicules automobiles à traction électrique, en particulier leurs roues motorisées.

Dans ce domaine, on connaît un certain nombre de propositions comme celles des documents DE 295 19 489, EP 0878332, WO 2006/032669, US 2007/0257570 ou WO 2007/083209.

Dans la présente demande, on utilise l'expression « moyeu motorisé » pour désigner l'ensemble mécanique comprenant le moyeu, le porte-moyeu, le guidage du moyeu par rapport au porte-moyeu, la motorisation électrique et les moyens de freinage du moyeu. Le moyeu motorisé est donc destiné d'une part à recevoir une roue équipée par exemple d'un pneumatique et à porter d'autre part un véhicule, généralement par l'intermédiaire de moyens de suspension. Dans la présente demande, on utilise également l'expression « roue motorisée » pour désigner l'ensemble mécanique comprenant le moyeu motorisé défini ci-dessus et la roue correspondante.

L'une des difficultés en vue de l'adoption de tels moyeux motorisés sur les véhicules de série est la compatibilité avec les solutions déjà adoptées et validées par les constructeurs pour certains éléments comme les systèmes de suspension et les roues. Une autre difficulté est d'obtenir un système compact, simple et le plus léger possible afin d'en rendre le coût acceptable pour cette industrie.

En particulier, l'intégration des moteurs électriques à l'intérieur même des roues est particulièrement désirable parce que l'adoption de la traction électrique passe souvent par la nécessité d'embarquer des batteries pour stocker l'énergie électrique ce qui, même avec les technologies les plus performantes connues à ce jour, oblige à consacrer un volume suffisant aux batteries à bord du véhicule, sauf à réduire énormément l'autonomie d'un véhicule électrique. Un raisonnement similaire peut être fait dans le cas des véhicules à pile à combustible.

Par ailleurs, si l'on veut pouvoir développer un couple de traction suffisant, il s'avère nécessaire d'installer des moyens de réduction car on ne peut, avec un moteur électrique suffisamment compact, développer un couple adéquat pour assurer directement la traction d'un véhicule de tourisme.

Enfin, on est en général conduit à devoir intégrer à la roue, non seulement le moteur électrique, les moyens de réduction nécessaire associés, mais aussi un dispositif de freinage mécanique (frein à disque ou à tambour).

Dans la plupart des dispositions connues, le disque ou le tambour et le moteur électrique sont concentriques à la roue.

Alors que les configurations à moteur à rotor intérieur, dont l'axe est décalé par rapport à l'axe de la roue pour permettre d'installer un étage de réduction entre l'axe de la roue et le rotor du moteur électrique, semblait avoir pour unique intérêt d'implanter une coulisse assurant la suspension de la roue également intégrée à la roue, le déposant s'est aperçu que l'on pouvait dégager un espace suffisant pour installer un disque ou un tambour de frein radialement à l'intérieur de l'arbre du moteur et axialement du côté intérieur véhicule par rapport aux moyens de réduction.

Cela permet un bon compromis, compte tenu notamment qu'une part du couple de freinage peut être assurée par voie électrique.

L'invention propose donc un moyeu motorisé pour un véhicule automobile à traction électrique, ledit moyeu motorisé comprenant un moyeu destiné à recevoir une roue, le moyeu étant monté rotatif par rapport à un porte-moyeu selon un axe de moyeu, le moyeu motorisé comprenant une machine électrique de traction, la machine électrique comprenant un stator externe solidaire du porte-moyeu et un rotor interne dont l'axe de rotation est distant de l'axe de moyeu et parallèle au dit axe de moyeu, le moyeu motorisé comprenant des moyens de réduction agissant entre le rotor de la machine électrique et le moyeu, le moyeu motorisé comprenant en outre des moyens de freinage par friction, le rotor de freinage étant solidaire du moyeu et disposé axialement du côté intérieur du véhicule par rapport aux moyens de réduction, l'arbre du rotor de la machine électrique étant placé radialement à l'extérieur du rotor de freinage et s'étendant axialement depuis les moyens de réduction vers l'intérieur du véhicule.

De préférence, le moyeu est guidé en rotation par rapport au porte-moyeu par l'intermédiaire de roulements de moyeu, le rotor de freinage étant disposé axialement du côté intérieur du véhicule par rapport aux roulements de moyeu.

De préférence encore, les moyens de réduction sont réversibles.

De préférence encore, les moyens de réduction comprennent un étage de réduction unique consistant en une couronne dentée solidaire du moyeu et un pignon moteur solidaire du rotor de la machine électrique et engrenant avec la couronne dentée.

De préférence encore, le rotor de freinage est un disque.

Selon une première variante de réalisation de l'invention, le plan médian du rotor de freinage coupe le stator de la machine électrique et la machine électrique est placée radialement à l'extérieur du rotor de freinage. De préférence, le rotor de freinage et la machine électrique sont compris dans le diamètre intérieur de la roue. De préférence, le rotor de freinage est solidaire du moyeu par l'intermédiaire d'un arbre cannelé traversant le moyeu, l'arbre cannelé assurant en outre le serrage axial des roulements de moyeu.

De préférence, le moyeu est solidaire de la partie intérieure des roulements de moyeu et le porte-moyeu est solidaire de la partie extérieure desdits roulements. De préférence, le porte-moyeu constitue en outre un carter enveloppant les moyens de réduction.

Selon une deuxième variante de réalisation de l'invention, le porte-moyeu s'étend au contraire à l'intérieur du moyeu et constitue une fusée solidaire de la partie intérieure des roulements de moyeu, le moyeu étant solidaire de la partie extérieure des roulements de moyeu. Un carter est monté tournant autour du moyeu. De préférence, le carter et arrêté en rotation par rapport à la fusée et supporte le stator de la machine électrique.

Selon une troisième variante de réalisation de l'invention, l'intégralité du stator de la machine électrique est placée axialement à l'extérieur de la roue vers l'intérieur du véhicule. De préférence, une douille, interposée entre le stator de la machine électrique et le porte-moyeu, supporte ledit stator, le pignon moteur prolongeant axialement le rotor de la machine électrique à travers ladite douille. De préférence, le rotor de freinage est placé en regard de la douille.

De préférence, la douille guide en outre le pignon moteur par l'intermédiaire de roulements de pignon et de préférence encore, le porte-moyeu constitue en outre un carter enveloppant les moyens de réduction.

Selon une quatrième variante de réalisation de l'invention, un carter enveloppant les moyens de réduction est solidaire du porte-moyeu, le pignon moteur étant guidé par rapport au porte-moyeu par l'intermédiaire de roulements de pignon solidaires dudit carter. De préférence encore, le pignon moteur est en outre guidé par un roulement solidaire d'un couvercle du carter, ledit roulement étant situé axialement à l'extérieur de la couronne dentée par rapport à la machine électrique.

De préférence, le rotor de freinage s'étend radialement à l'extérieur de la partie du stator de la machine électrique radialement la plus à l'intérieur, le rotor de freinage étant placé axialement entre le stator de la machine électrique et les moyens de réduction.

Selon l'invention, le moyeu motorisé comprend en outre un réservoir de lubrifiant pour les moyens de réduction mettant en oeuvre au moins une excroissance située dans une partie basse du carter.

L'invention concerne également une roue motorisée comprenant un moyeu motorisé selon l'une des revendications précédentes. De préférence, la roue motorisée comprend une roue conventionnelle monobloc, de préférence en tôle d'acier.

L'invention concerne en outre un véhicule comprenant au moins deux telles roues motorisées. De préférence, deux roues motorisées sont disposées sur l'essieu arrière dudit véhicule, les porte-moyeux de deux roues motorisées étant chacun solidaire d'un bras tirés de l'essieu arrière.

D'autres caractéristiques et avantages de l'invention apparaîtront grâce à la description de modes préférés de réalisation. Les figures représentent respectivement:
- Figure 1 : vue en coupe selon le plan B-B de la figure 2 passant par l'axe du moyeu d'un premier mode de réalisation de l'invention ;
- Figure 2 : vue de côté du premier mode de réalisation de l'invention ;
- Figure 3 : vue en coupe similaire à la figure 1 d'un deuxième mode de réalisation de l' invention ;
- Figure 4 : vue en coupe selon le plan B-B de la figure 5 passant par l'axe du moyeu d'un troisième mode de réalisation de l'invention ;
- Figure 5 : vue de côté du troisième mode de réalisation de l'invention ;
- Figure 6 : vue de côté d'un quatrième mode de réalisation de l'invention ;
- Figure 7 : vue en coupe selon le plan B-B de la figure 6 passant par l'axe du moyeu du quatrième mode de réalisation de l'invention;
- Figure 8 : vue en coupe selon le plan C-C de la figure 6 passant par l'axe du moyeu du quatrième mode de réalisation de l'invention.

Sur l'ensemble des figures, les éléments identiques ou similaires portent la même référence. Leur description n'est donc pas systématiquement reprise.

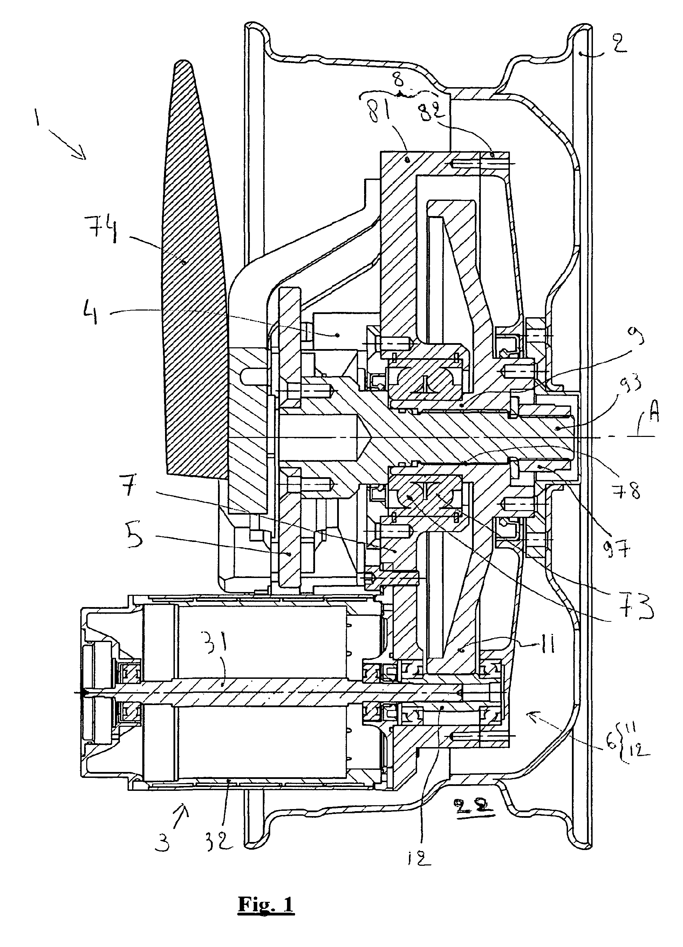

La figure 1 représente un premier mode de réalisation d'un moyeu motorisé 1 selon l'invention. Le moyeu motorisé 1 est destiné à guider et contrôler la rotation d'une roue 2. Le pneumatique a été omis sur cette figure. Un moyeu 9, destiné à recevoir la roue 2, est monté tournant par rapport à un porte-moyeu 7 selon un axe de moyeu A.

L'axe de moyeu (qui est donc également l'axe de rotation de la roue) est une référence constante dans la présente demande; c'est par rapport à cet axe A que l'on se réfère pour qualifier une orientation de « radiale » ou d'« axiale ». Pour rappel et selon l'usage consacré dans le domaine du pneumatique ou de la roue, une orientation axiale est une orientation parallèle à l'axe du moyeu et une orientation radiale est une orientation perpendiculaire à l'axe du moyeu.

Les roulements de moyeu 73 sont axialement serrés sur le moyeu 9 par un arbre de roue 93 recevant un écrou 97 à son extrémité extérieure (à droite sur la figure 1). La partie extérieure des roulements de moyeu est fixe (solidaire du porte-moyeu 7) et la partie intérieure tourne avec le moyeu 9. Le porte-moyeu est extérieur au moyeu.

Une machine électrique 3 assure la motorisation et le cas échéant le freinage de la roue par l'intermédiaire de moyens de réduction 6. Pour alléger le dessin de la machine électrique, on a représenté uniquement le fourreau extérieur du stator 32, ses extrémités ainsi que l'arbre moteur 31 et son guidage.

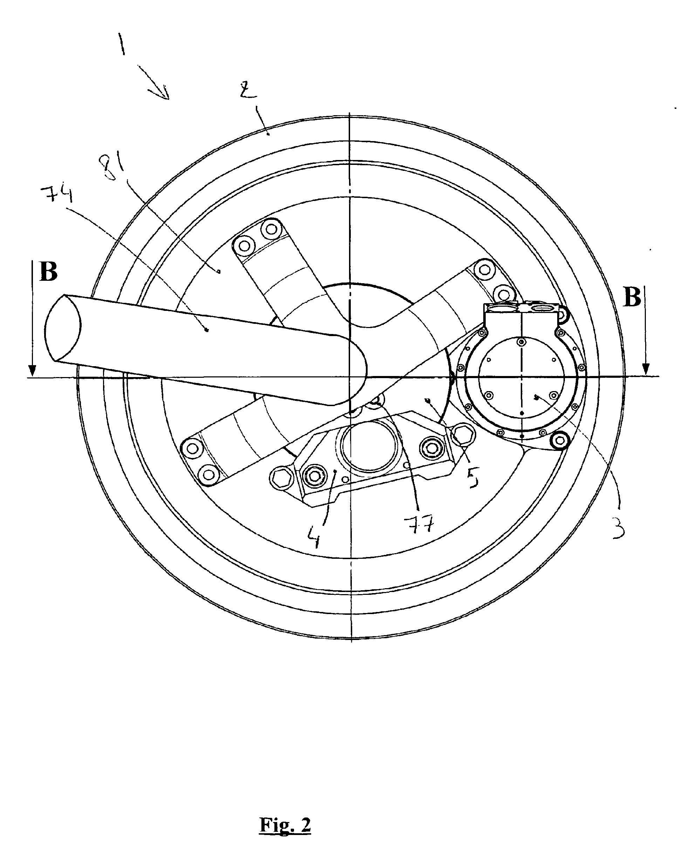

L'axe de rotation du rotor de la machine électrique est parallèle à l'axe de moyeu et distant de celui-ci. Le stator 32 de la machine électrique est solidaire du porte-moyeu. Les moyens de réduction 6 comprennent une couronne dentée 11 solidaire du moyeu 9 et un pignon 12 lié à l'arbre moteur 31 de la machine électrique 3. Un carter 8 protège les moyens de réduction. Le porte-moyeu constitue ici une partie principale 81 du carter qui est complété par un couvercle 82. Des moyens de freinage à friction comprennent un rotor de freinage (disque 5) et un stator de freinage (pince 4). Le disque est solidaire du moyeu par l'intermédiaire de l'arbre de roue 93. L'arbre de roue 93 et le moyeu 9 sont bloqués en rotation relative, de préférence par l'intermédiaire de cannelures correspondantes 78. Le plan médian du rotor de freinage coupe donc le stator de la machine électrique. La pince de frein 4 est solidaire du porte-moyeu. Le rotor de freinage est situé axialement à l'intérieur du véhicule par rapport au porte-moyeu et son diamètre extérieur est de préférence très réduit afin de pouvoir loger également la machine électrique 3 (plus précisément son stator 32) radialement à l'intérieur de la roue 2 et à l'extérieur du rotor de freinage (ici le disque 5). Cet aspect préféré de l'invention est bien visible sur la figure 2. La roue représentée ici est une roue monobloc conventionnelle en tôle d'acier de 16 pouces de diamètre.

De préférence, la roue motorisée selon ce premier mode de réalisation est fixée directement aux éléments de suspension du véhicule, par exemple à un bras tiré d'un essieu arrière comme indiqué schématiquement à la figure 2 où l'on voit que le bras tiré 74 est solidaire du carter 81 et donc du porte-moyeu.

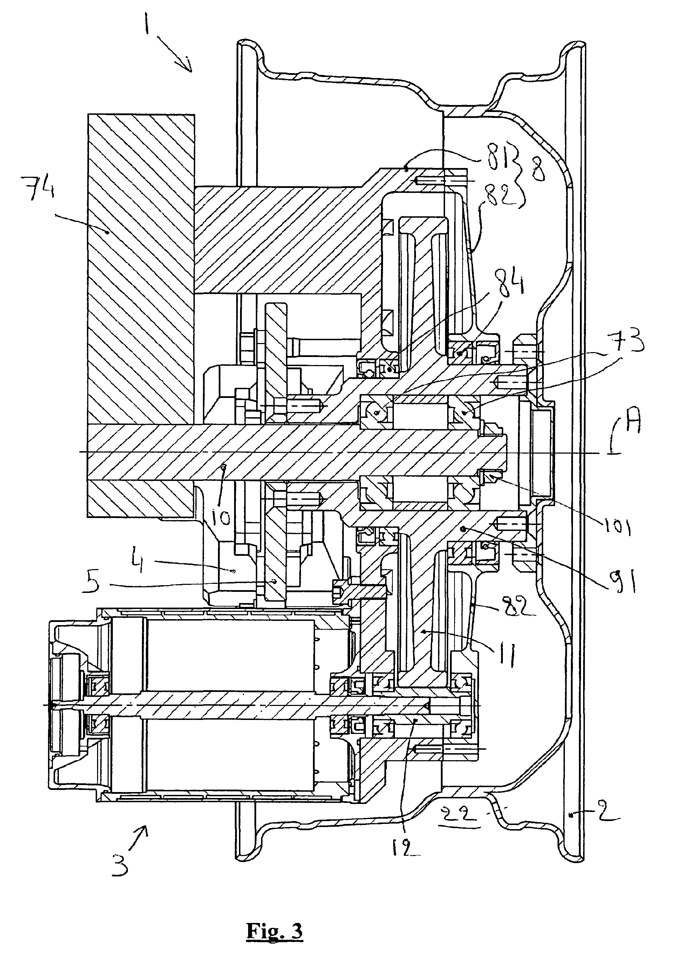

La figure 3 représente un deuxième mode de réalisation d'un moyeu motorisé selon l'invention. Une différence essentielle avec le premier mode de réalisation réside dans le fait que le porte-moyeu est ici constitué par une fusée 10 autour de laquelle tourne le moyeu 91. Le porte-moyeu est donc intérieur au moyeu. Le moyeu est monté sur la fusée par l'intermédiaire de roulements 73 dont la partie extérieure est donc tournante alors que la partie intérieure est fixe, c'est à dire selon une configuration inversée par rapport au montage de la figure 1. Les roulements de moyeu sont axialement serrés sur la fusée par un écrou de fusée 101 à son extrémité extérieure (à droite sur la figure 3). Le moyeu étant tenu par l'intérieur, le carter 8 des moyens de réduction ne participe plus au guidage de la roue comme sur le mode de réalisation de la figure 1 mais il conserve sa fonction de guidage de la machine électrique 3 et du pignon moteur 12. Le carter (assemblé en deux parties complémentaires 81 et 82) est monté tournant sur le moyeu par l'intermédiaire de roulements 84 et sa rotation par rapport à la fusée est arrêtée par un moyen anti-rotation qui le lie directement ou indirectement à la fusée 10 ou au bras tiré 74 sur lequel est fixée la fusée. La roue représentée ici est une roue monobloc conventionnelle en tôle d'acier de 17 pouces de diamètre. Le pneumatique a été omis.

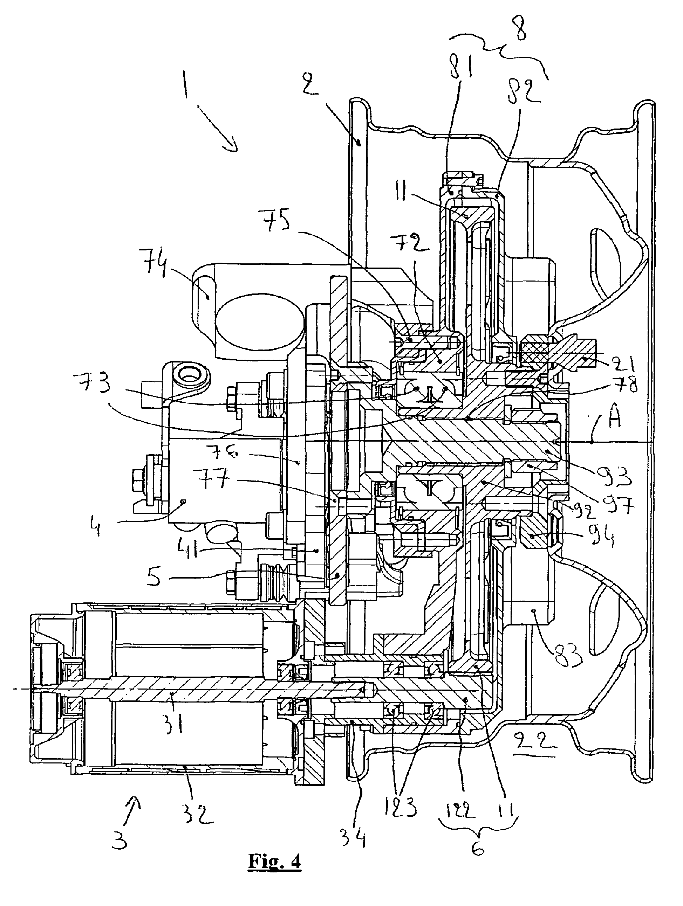

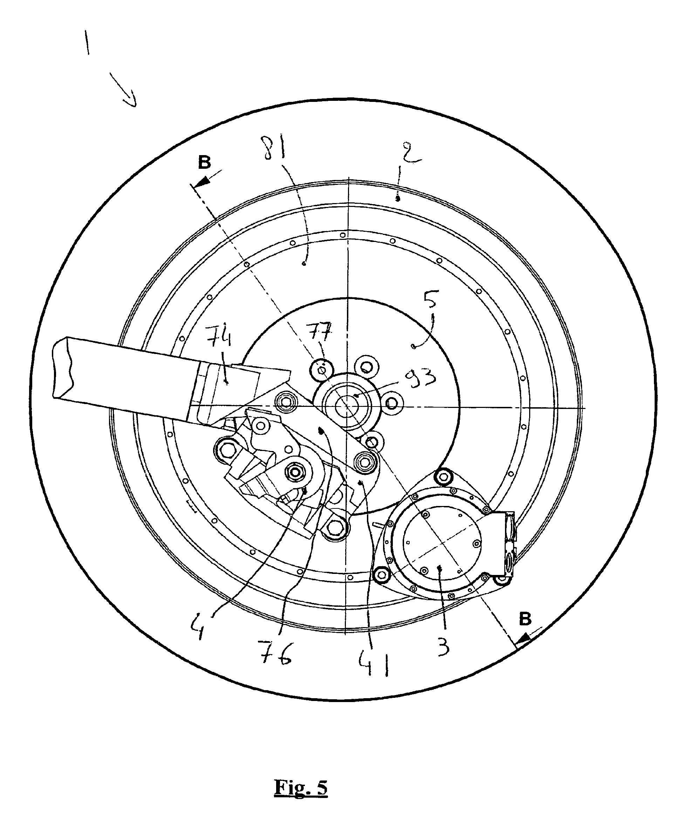

Les figures 4 et 5 représentent un troisième mode de réalisation de l'invention qui s'apparente essentiellement au premier mode représenté aux figures 1 et 2 sauf en ce qui concerne les positionnements relatifs de la machine électrique 3, de la roue 2 et du disque de frein 5. La machine électrique 3 est en particulier ici déportée axialement vers l'intérieur du véhicule de sorte que son stator est entièrement placé à l'extérieur de la roue 2.

Sur la figure 4, on voit bien que le porte-moyeu 72 guide le moyeu 92 par l'intermédiaire de roulements 73 dont la bague intérieure est tournante et la bague extérieure est fixe comme dans le montage décrit à la figure 1. Le porte-moyeu 72 constitue également la partie intérieure 81 du carter 8 protégeant les moyens de réduction 6. Le porte-moyeu supporte en outre l'ancrage de la machine électrique mais au lieu que la machine électrique soit fixée directement au carter comme sur la figure 1, la machine électrique est ici déportée vers l'intérieur du véhicule par l'intermédiaire d'une douille 34 accueillant et guidant également le pignon moteur 122 (voir roulements 123). Cette configuration permet en particulier d'augmenter le rapport de réduction en logeant une couronne dentée 11 de plus grand diamètre puisqu'elle n'est plus placée en regard du creux de jante 22 et que les roulements de guidage du pignon moteur 122 en sont également dégagés. Cette configuration à machine électrique déportée est donc d'autant plus intéressante que la roue est d'un diamètre réduit. Le disque de frein 5 peut alors être placé en regard de la douille 34 et non plus en regard du stator de la machine électrique, ce qui autorise un diamètre de disque plus important. Le disque se trouve donc placé axialement entre le stator 32 de la machine électrique et les moyens de réduction 6. Le plan médian du rotor de freinage ne coupe donc plus le stator de la machine électrique. Le porte-moyeu 72 est fixé au système de suspension du véhicule, c'est à dire ici à l'extrémité du bras tiré 74 par l'intermédiaire de vis 75.

Les roulements de moyeu 73 sont axialement serrés sur le moyeu 92 par l'arbre de roue 93 recevant l'écrou 97 à son extrémité extérieure (à droite sur la figure 4). Le disque de frein 5 est fixé par des vis 77 à l'extrémité intérieure (gauche sur la figure) de l'arbre de roue 93. Des cannelures 78 empêchent toute rotation de l'arbre de roue dans le moyeu de sorte que le disque est bien solidaire du moyeu et donc de la roue 2. L'étrier 41 de la pince de frein 4 est fixé sur un support d'étrier 76 issu du bras tiré 74. Le couvercle 82 du carter comprend une excroissance 83 dans sa partie basse afin de constituer un réservoir de lubrifiant de contenance adéquate. Un flasque 94 est fixé à l'extrémité extérieure du moyeu et reçoit la roue 2 fixée par des vis 21. Naturellement, une roue différente pourrait être fixée directement au moyeu 92 sans recours au flasque mais le système représenté ici a l'avantage de s'accommoder de roues et de vis de roue tout à fait conventionnelles. La roue représentée ici est une roue monobloc standard en tôle d'acier de 15 pouces de diamètre (6J15-ET27).

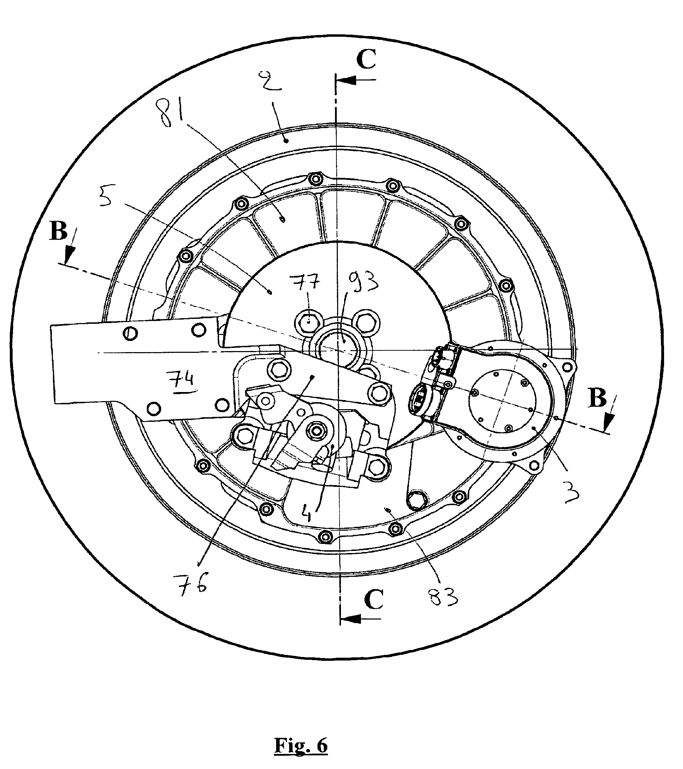

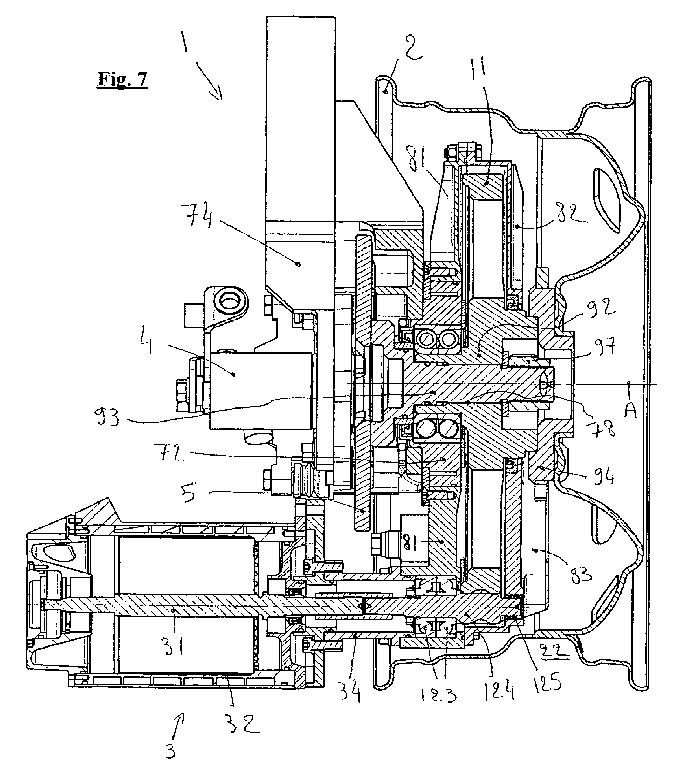

Les figures 6 à 8 représentent un quatrième mode de réalisation de l'invention similaire à celui des figures 4 et 5. Ce mode de réalisation utilise la même roue standard de 15 pouces de diamètre. Les principales différences concernent le guidage du pignon moteur et la séparation du porte-moyeu et du carter.

En effet, les roulements de pignon 123 sont ici portés directement par le carter, la douille 34 ne servant plus qu'à maintenir la position axiale des roulements. Le pignon moteur 124 se prolonge au-delà de son engrènement avec la couronne 11 afin d'être en outre guidé par un roulement suplémentaire (une cage à aiguilles 125) porté par le couvercle 82 du carter.

La partie intérieure 81 du carter 8 n'est plus monobloc avec le porte-moyeu 72 mais ces deux pièces sont ici assemblées par des vis 86. Un avantage de cette séparation est que l'on peut alors choisir des matériaux différents pour le porte-moyeu et le carter, par exemple respectivement de l'acier et un alliage d'aluminium.

La machine électrique 3 est encore plus déportée vers l'intérieur du véhicule de sorte que le disque de frein 5 peut s'étendre d'avantage radialement dans l'espace libéré entre la machine électrique et le carter.

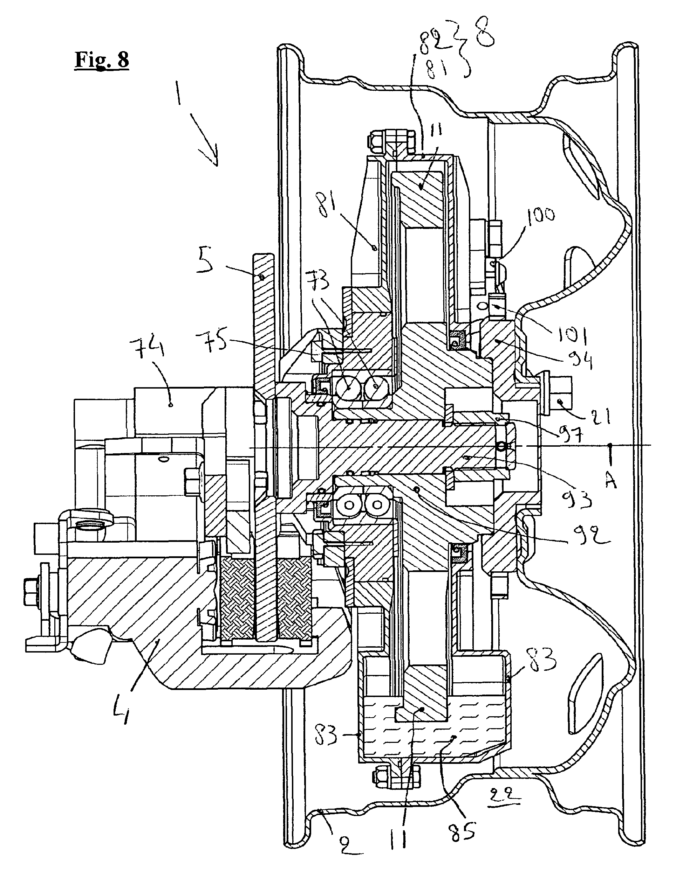

A la figure 8 en particulier, on voit bien le réservoir 85 de lubrifiant crée en bas du carter par les excroissances 83 des parties intérieure 81 et extérieure 82 du carter.

On a en outre représenté un capteur ABS 100 porté par le couvercle 82 et placé en regard d'une couronne ABS 101 portée par le flasque 94.

Sur les différentes figures, on a représenté une seule machine électrique. Naturellement, on peut selon l'invention mettre en oeuvre deux ou plusieurs machines pour chaque moyeu, les machines engrenant chacune par l'intermédiaire d'un pignon moteur propre sur une couronne 11 unique. Grâce à une motorisation multiple, on peut augmenter le couple disponible et/ou réduire les dimensions axiale et radiale des machines électriques.

Sur l'ensemble des variantes, le porte-moyeu et le bras tiré (ou seulement une partie du bras) peuvent être fabriqués d'une seule pièce au lieu d'être assemblés par des vis comme représenté le plus souvent ici.

De même, on a systématiquement représenté un frein à disque. Il s'agit en effet d'un mode de réalisation préféré mais l'homme du métier sait que dans certaines situations, il peut être préférable d'utiliser un frein à tambour en lieu et place du frein à disque.

Quel que soit le mode de réalisation de l'invention, les moyens de réduction sont de préférence réversibles afin de permettre l'utilisation de la machine électrique en mode freinage. L'énergie électrique récupérée par la machine électrique en mode freinage peut être stockée ou dissipée de manière connue en soi.

Une caractéristique essentielle des moyeux motorisés de l'invention est le choix que l'on a fait d'une machine électrique à rotor interne dont l'axe de rotation est distant de l'axe de moyeu et parallèle au dit axe de moyeu, c'est à dire non concentrique. La configuration de l'invention permet d'obtenir un rapport de réduction suffisant avec un seul engrènement, c'est-à-dire avec un seul étage de réduction. Le rapport de réduction des modes de réalisation illustrés ici est de l'ordre de 15.

## Revendications

1. Moyeu motorisé (1) pour un véhicule automobile à traction électrique, ledit moyeu motorisé comprenant un moyeu (9) destiné à recevoir une roue (2), le moyeu étant monté rotatif par rapport à un porte-moyeu (7) selon un axe de moyeu (A), le moyeu motorisé comprenant une machine électrique de traction (3), la machine électrique comprenant un stator externe (32) solidaire du porte-moyeu et un rotor interne (31) dont l'axe de rotation est distant de l'axe de moyeu et parallèle au dit axe de moyeu, le moyeu motorisé comprenant des moyens de réduction (6) agissant entre le rotor de la machine électrique et le moyeu, le moyeu motorisé comprenant en outre des moyens de freinage par friction, **caractérisé en ce que** le rotor de freinage (5) est solidaire du moyeu et disposé axialement du côté intérieur du véhicule par rapport aux moyens de réduction, l'arbre du rotor (31) de la machine électrique étant placé radialement à l'extérieur du rotor de freinage et s'étendant axialement depuis les moyens de réduction vers l'intérieur du véhicule.

2. Moyeu motorisé selon la revendication 1 dans lequel, le moyeu (9) étant guidé en rotation par rapport au porte-moyeu par l'intermédiaire de roulements de moyeu (73), le rotor de freinage (5) étant disposé axialement du côté intérieur du véhicule par rapport aux roulements de moyeu.

3. Moyeu motorisé selon l'une des revendications précédentes dans lequel les moyens de réduction comprennent un étage de réduction unique consistant en une couronne dentée (11) solidaire du moyeu et un pignon moteur (12) solidaire du rotor (31) de la machine électrique et engrenant avec la couronne dentée.

4. Moyeu motorisé selon l'une des revendications précédentes dans lequel le rotor de freinage est un disque (5), le plan médian du disque coupant le stator de la machine électrique.

5. Moyeu motorisé selon l'une des revendications précédentes dans lequel la machine électrique (3) est placée radialement à l'extérieur du rotor de freinage (5).

6. Moyeu motorisé selon la revendication 5 dans lequel le rotor de freinage et la machine électrique sont compris dans le diamètre intérieur de la roue (2).

7. Moyeu motorisé selon l'une des revendications précédentes dans lequel le rotor de freinage est solidaire du moyeu par l'intermédiaire d'un arbre cannelé (93) traversant le moyeu (9), l'arbre cannelé assurant en outre le serrage axial des roulements de moyeu (73).

8. Moyeu motorisé selon l'une des revendications précédentes dans lequel le moyeu (9) est solidaire de la partie intérieure des roulements de moyeu et le porte-moyeu est solidaire de la partie extérieure desdits roulements.

9. Moyeu motorisé selon l'une des revendications 1 à 4, dans lequel le porte-moyeu s'étend à l'intérieur du moyeu (91) et constitue une fusée (10) solidaire de la partie intérieure des roulements de moyeu (73), le moyeu étant solidaire de la partie extérieure des roulements de moyeu.

10. Moyeu motorisé selon la revendication 9 dans lequel un carter (8) est monté tournant autour du moyeu (91), le carter étant arrêté en rotation par rapport à la fusée (10) et supportant le stator (31) de la machine électrique.

11. Moyeu motorisé selon l'une des revendications 1 à 4 dans lequel l'intégralité du stator de la machine électrique est placée axialement à l'extérieur de la roue (2) vers l'intérieur du véhicule.

12. Moyeu motorisé selon la revendication 11 dans lequel le rotor de freinage (5) s'étend radialement à l'extérieur de la partie du stator de la machine électrique radialement la plus à l'intérieur, le rotor de freinage étant placé axialement entre le stator de la machine électrique et les moyens de réduction.

13. Moyeu motorisé selon l'une des revendications précédentes, un carter (8) enveloppant les moyens de réduction, ledit moyeu motorisé comprenant en outre un réservoir (85) de lubrifiant pour les moyens de réduction mettant en oeuvre au moins une excroissance (83) située dans une partie basse du carter.

14. Roue motorisée (1, 2) comprenant un moyeu motorisé (1) selon l'une des revendications précédentes.

15. Véhicule comprenant au moins deux roues motorisées selon la revendication 14.

16. Véhicule selon la revendication 15 dans lequel deux roues motorisées sont disposées sur l'essieu arrière dudit véhicule, les porte-moyeux (72) de deux roues motorisées étant chacun solidaires d'un bras tirés (74) de l'essieu arrière.

## Patentansprüche

1. Motorisierte Nabe (1) für ein Kraftfahrzeug mit Elektroantrieb, wobei die motorisierte Nabe eine Nabe (9) enthält, die dazu bestimmt ist, ein Rad (2) aufzunehmen, wobei die Nabe bezüglich eines Nabenträgers (7) gemäß einer Nabenachse (A) drehbar montiert ist, wobei die motorisierte Nabe eine elektrische Antriebsmaschine (3) enthält, wobei die elektrische Maschine einen externen Stator (32), der fest mit dem Nabenträger verbunden ist, und einen internen Rotor (31) enthält, dessen Drehachse von der Nabenachse entfernt und parallel zur Nabenachse ist, wobei die motorisierte Nabe Untersetzungseinrichtungen (6) enthält, die zwischen dem Rotor der elektrischen Maschine und der Nabe wirken, wobei die motorisierte Nabe außerdem Reibungsbremseinrichtungen enthält, **dadurch gekennzeichnet, dass** der Bremsrotor (5) fest mit der Nabe verbunden und bezüglich der Untersetzungseinrichtungen axial auf der Innenseite des Fahrzeugs angeordnet ist, wobei die Welle des Rotors (31) der elektrischen Maschine radial außerhalb des Bremsrotors angeordnet ist und sich axial von den Untersetzungseinrichtungen zum Inneren des Fahrzeugs erstreckt.

2. Motorisierte Nabe nach Anspruch 1, wobei, da die Nabe (9) bezüglich des Nabenträgers mittels Nabenlagern (73) in Drehung geführt wird, der Bremsrotor (5) axial auf der Innenseite des Fahrzeugs bezüglich der Nabenlager angeordnet ist.

3. Motorisierte Nabe nach einem der vorhergehenden Ansprüche, wobei die Untersetzungseinrichtungen eine einzige Untersetzungsstufe enthalten, die aus einem fest mit der Nabe verbundenen Zahnkranz (11) und aus einem fest mit dem Rotor (31) der elektrischen Maschine verbundenen Antriebsritzel (12) besteht, das in den Zahnkranz eingreift.

4. Motorisierte Nabe nach einem der vorhergehenden Ansprüche, wobei der Bremsrotor eine Scheibe (5) ist, wobei die Mittelebene der Scheibe den Stator der elektrischen Maschine schneidet.

5. Motorisierte Nabe nach einem der vorhergehenden Ansprüche, wobei die elektrische Maschine (3) radial außerhalb des Bremsrotors (5) angeordnet ist.

6. Motorisierte Nabe nach Anspruch 5, wobei der Bremsrotor und die elektrische Maschine im Innendurchmesser des Rads (2) enthalten sind.

7. Motorisierte Nabe nach einem der vorhergehenden Ansprüche, wobei der Bremsrotor mittels einer die Nabe (9) durchquerenden Keilwelle (93) fest mit der Nabe verbunden ist, wobei die Keilwelle außerdem das axiale Einspannen der Nabenlager (73) gewährleistet.

8. Motorisierte Nabe nach einem der vorhergehenden Ansprüche, wobei die Nabe (9) mit dem inneren Bereich der Nabenlager fest verbunden und der Nabenträger mit dem äußeren Bereich der Lager fest verbunden ist.

9. Motorisierte Nabe nach einem der Ansprüche 1 bis 4, wobei der Nabenträger sich im Inneren der Nabe (91) erstreckt und einen Nabenschenkel (10) bildet, der fest mit dem inneren Bereich der Nabenlager (73) verbunden ist, wobei die Nabe mit dem äußeren Bereich der Nabenlager fest verbunden ist.

10. Motorisierte Nabe nach Anspruch 9, wobei ein Gehäuse (8) um die Nabe (91) drehend montiert ist, wobei das Gehäuse bezüglich des Nabenschenkels (10) in Drehung arretiert ist und den Stator (31) der elektrischen Maschine trägt.

11. Motorisierte Nabe nach einem der Ansprüche 1 bis 4, wobei die Gesamtheit des Stators der elektrischen Maschine axial außerhalb des Rads (2) zur Innenseite des Fahrzeugs angeordnet ist.

12. Motorisierte Nabe nach Anspruch 11, wobei der Bremsrotor (5) sich radial außerhalb des radial am weitesten innen liegenden Bereichs des Stators der elektrischen Maschine erstreckt, wobei der Bremsrotor axial zwischen dem Stator der elektrischen Maschine und den Untersetzungseinrichtungen angeordnet ist.

13. Motorisierte Nabe nach einem der vorhergehenden Ansprüche, wobei ein Gehäuse (8) die Untersetzungseinrichtungen umhüllt, wobei die motorisierte Nabe außerdem einen Schmiermittelbehälter (85) für die Untersetzungseinrichtungen enthält, der mindestens eine Ausstülpung (83) verwendet, die sich in einem unteren Bereich des Gehäuses befindet.

14. Motorisiertes Rad (1, 2), das eine motorisierte Nabe (1) nach einem der vorhergehenden Ansprüche enthält.

15. Fahrzeug, das mindestens zwei motorisierte Räder nach Anspruch 14 enthält.

16. Fahrzeug nach Anspruch 15, wobei zwei motorisierte Räder auf der Hinterachse des Fahrzeugs angeordnet sind, wobei die Nabenträger (72) von zwei motorisierten Rädern je mit einem Längslenker (74) der Hinterachse fest verbunden sind.

## Claims

1. Motorized hub (1) for an electric traction automobile vehicle, said motorized hub comprising a hub (9) adapted to receive a wheel (2), the hub being mounted to rotate relative to a hub-carrier (7) about a hub axis (A), the motorized hub comprising a traction electric machine (3), the electric machine comprising an external stator (32) fastened to the hub-carrier and an internal rotor (31) the rotation axis of which is spaced from the hub axis and parallel to said hub axis, the motorized hub comprising reduction means (6) operating between the rotor of the electric machine and the hub, the motorized hub further comprising friction braking means, **characterised in that** the brake rotor (5) is fastened to the hub and disposed axially on the vehicle interior side relative to the reduction means, the shaft of the rotor (31) of the electric machine being placed radially outside the brake rotor and extending axially from the reduction means toward the interior of the vehicle.

2. Motorized hub according to Claim 1 wherein, the hub (9) is guided in rotation relative to the hub-carrier by hub bearings (73), the brake rotor (5) being disposed axially on the vehicle interior side relative to the hub bearings.

3. Motorized hub according to any of the preceding claims wherein the reduction means comprise a single reduction stage consisting of a toothed ring (11) fastened to the hub and a drive gear (12) fastened to the rotor (31) of the electric machine and meshing with the toothed ring.

4. Motorized hub according to any of the preceding claims wherein the brake rotor is a disc (5), the median plane of the disc intersecting the stator of the electric machine.

5. Motorized hub according to any of the preceding claims wherein the electric machine (3) is placed radially outside the brake rotor (5).

6. Motorized hub according to Claim 5 wherein the brake rotor and the electric machine are within the inside diameter of the wheel (2).

7. Motorized hub according to any of the preceding claims wherein the brake rotor is fastened to the hub by means of a splined shaft (93) passing through the hub (9), the splined shaft also axially clamping the hub bearings (73).

8. Motorized hub according to any of the preceding claims wherein the hub (9) is fastened to the interior part of the hub bearings and the hub-carrier is fastened to the exterior part of said bearings.

9. Motorized hub according to any of Claims 1 to 4, wherein the hub-carrier is inside the hub (91) and constitutes a stub axle (10) fastened to the interior part of the hub bearings (73), the hub being fastened to the exterior part of the hub bearings.

10. Motorized hub according to Claim 9 wherein a casing (8) is mounted to rotate about the hub (91), the casing being prevented from rotating relative to the stub axle (10) and supporting the stator (31) of the electric machine.

11. Motorized hub according to any of Claims 1 to 4 wherein the whole of the stator of the electric machine is positioned axially outside the wheel (2) toward the interior of the vehicle.

12. Motorized hub according to Claim 11 wherein the brake rotor (5) is radially outside the radially innermost part of the stator of the electric machine, the brake rotor being placed axially between the stator of the electric machine and the reduction means.

13. Motorized hub according to any of the preceding claims, a casing (8) enclosing the reduction means, said motorized hub also comprising a reservoir (85) of lubricant for the reduction means using at least one protuberance (83) situated in a lower part of the casing.

14. Motorized wheel (1, 2) comprising a motorized hub (1) according to any of the preceding claims.

15. Vehicle comprising at least two motorized wheels according to Claim 14.

16. Vehicle according to Claim 15 wherein two motorized wheels are disposed on the rear axle of said vehicle, the hub-carriers (72) of the two motorized wheels being each fastened to a trailing arm (74) of the rear axle.
